# FASCICULE DE BREVET EUROPEEN

(11) **EP 3 210 659 B1**
(45) Date de publication et mention de la délivrance du brevet: **10.04.2019**
(21) Numéro de dépôt: 17156320.8
(22) Date de dépôt: 15.02.2017
(51) Int. Cl.: A63H 27/00, B64C 39/02, B64D 27/00

(54) **DRONE MUNI D'UN BLOC BATTERIE À FONCTION RIGIDIFICATRICE**
DROHNE, DIE MIT EINEM BATTERIEBLOCK MIT AUSSTEIFUNGSFUNKTION AUSGESTATTET IST
DRONE PROVIDED WITH A BATTERY UNIT WHICH HAS A STIFFENING FUNCTION

(30) Priorité: 25.02.2016 FR 1651571
(43) Date de publication de la demande: 30.08.2017
(73) Titulaire: Parrot Drones, 75010 Paris (FR)
(72) Inventeur: SANLAVILLE, M. Thierry, 75015 Paris (FR); DUCLOUX, M. Maxime, 91660 Mereville (FR); MORRA, M. Flavien, 93500 Pantin (FR)
(74) Mandataire: Dupuis-Latour, Dominique

(56) Documents cités:
- EP-A1- 2 937 123
- DE-A1-102013 206 478
- JP-U- H0 460 297

## Description

L'invention concerne les engins volants motorisés tels que les drones, notamment les drones à voilure tournante de type quadricoptère.

Un exemple typique d'un tel drone est l'*AR.Drone,* le *Bebop Drone* ou le *Bebop* de Parrot SA, Paris, France, qui est un quadricoptère équipé d'une série de capteurs (accéléromètres, gyromètres trois axes, altimètre), et peut comprendre au moins une caméra vidéo frontale captant une image de la scène vers laquelle est dirigé le drone.

Ces drones sont pourvus de plusieurs rotors entrainés par des moteurs respectifs aptes à être commandés de manière différenciée afin de piloter le drone en attitude et en vitesse.

Ces quadricoptères sont équipés de quatre blocs propulseurs munis chacun d'hélice. Les blocs propulseurs sont positionnés à l'extrémité distale des bras de liaison reliant les blocs propulseurs au corps du drone. En outre, ces drones comprennent une pluralité de supports de drone ou de pieds afin de supporter le drone notamment lorsqu'il est au sol.

Les WO 2010/061099 A2, EP 2 364 757 A1 et EP 2 450 862 A1 (Parrot) décrivent le principe de pilotage d'un drone par l'intermédiaire d'un téléphone ou tablette multimedia à écran tactile et accéléromètres intégrés, par exemple un *smartphone* de type *iPhone* ou une tablette de type *iPad* (marques déposées).

La structure et le poids du drone sont deux aspects importants pour les performances de vol du drone notamment en termes d'autonomie et de nervosité et d'agilité de pilotage.

Le principal composant source du poids du drone est le bloc batterie du drone.

Il est connu de prévoir un logement dans la structure du drone pour l'insertion du bloc batterie dans la structure du drone. L'insertion du bloc batterie est souvent délicate car le logement est étroit et l'utilisateur doit préalablement à l'insertion du bloc batterie réaliser le branchement électrique du connecteur du bloc batterie au connecteur électrique du drone. L'ensemble de ces opérations est fastidieux et peu pratique pour l'utilisateur. En outre, le bloc batterie inséré dans le logement peut bouger et donc influencer sur le vol du drone.

Ainsi, l'optimisation du bloc batterie dans sa forme et son intégration dans le drone jouent un rôle important.

Le DE 2013 206 478 A1 décrit un drone comportant un corps central de forme relativement massive et ramassée, à partir duquel rayonnent en croix à partir d'un point central du corps quatre bras tubulaires, chaque bras portant à sont extrémité distale un bloc propulseur moteur-hélice. Le corps du drone est surmonté par un bloc batterie emboité dans un évidement de forme homologue ménagé dans le capot supérieur du corps du drone.

Le EP 2 937 123 A1 (Parrot) décrit la structure interne d'un drone du type *Bebop* précité, montrant une batterie amovible disposée sur le corps du drone, dans une région supérieure arrière de celui-ci. La batterie est assujettie au corps du drone au moyen d'une bride, par exemple une bande auto-agrippante, passée dans un oeillet prévu pour recevoir cette bride, formant une extension latérale d'un élément rigide métallique interne présent à l'intérieur du corps du drone, en l'espèce une platine en magnésium.

L'invention vise le cas d'un drone dans lequel la partie du corps de drone supportant le bloc batterie (ci-après "plateforme") est relativement déformable, soit du fait d'une configuration des bras particulièrement propice à la formation de contraintes de torsion/flexion de la plateforme (à la différence du DE 2013 206 478 A1 où les quatre bras rayonnent en croix à partir du centre du corps, qui est de plus massif donc très rigide), soit du fait de l'absence de tout élément raidisseur interne (à la différence du EP 2 937 123 A1 où la platine en magnésium assure entre autres cette fonction de rigidification).

Dans un tel cas, les déformations de la plateforme peuvent affecter la géométrie relative des quatre bras, avec par voie de conséquence des effets suffisants pour perturber de façon mesurable le comportement aérodynamique du drone en vol. De fait, ces déformations sont très rapidement susceptibles d'engendrer des difficultés appréciables de pilotage et de stabilisation d'assiette pendant les phases de vol, notamment lors des changements brusques d'attitude, qui génèrent de façon subite des contraintes différentielles importantes.

Le but de l'invention est de proposer un drone permettant d'éliminer ces inconvénients liés au comportement aérodynamique (difficultés de pilotage, de stabilisation d'assiette, etc.), ou à tout le moins de les réduire à des niveaux non mesurables et/ou non gênants sur le plan du contrôle de vol du drone.

À cet effet, l'invention propose un drone à voilure tournante comprenant, comme divulgué notamment par le DE 2013 206 478 A1 précité, un drone à voilure tournante comprenant :
- un corps de drone avec une structure de châssis comprenant une structure avant et une plateforme s'étendant vers l'arrière à partir de la structure avant ;
- des bras de liaison avant fixés à la structure avant, et des bras de liaison arrière fixés à la plateforme, chacun des bras de liaison avant et arrière comprenant à son extrémité distale un bloc propulseur ; et
- un bloc batterie apte à être monté sur la plateforme de la structure de châssis, et comportant un moyen de fixation pour solidariser la batterie à la plateforme.

De façon caractéristique de l'invention, la plateforme étant déformable et susceptible d'entrainer incidemment une déformation des bras de liaison arrière lors du vol du drone :
- le bloc batterie est rigide et comprend le moyen de fixation ainsi qu'un profil de guidage ;
- la plateforme comprend au moins un rail de guidage agencé sur une surface de la plateforme apte à accueillir le bloc batterie, et apte à coopérer avec le profil de guidage du bloc batterie,
   le rail de guidage étant de section trapézoïdale et présent sur au moins une partie de la plateforme, et le profil de guidage étant de forme complémentaire de telle sorte que le rail de guidage permette une reprise mécanique des efforts de torsion de la structure de châssis générés lors du vol du drone ; et
- la plateforme comprend en outre au moins un moyen de fixation complémentaire apte à coopérer avec le moyen de fixation du bloc batterie, le moyen de fixation et le moyen de fixation complémentaire étant aptes à permettre un blocage en translation du bloc batterie.

Grâce à un tel agencement, la rigidité du bloc batterie solidarisé à la structure de châssis renforce structurellement le corps du drone et rigidifie le corps en évitant une déformation de la plateforme et une déformation incidente des bras de liaison arrière lors du vol du drone.

Selon diverses caractéristiques subsidiaires :
- les points de fixation au corps du drone des deux bras de liaison avant et les points de fixation au corps du drone des deux bras de liaison arrière sont situés à des hauteurs respectives différentes par rapport au plan médian horizontal du corps du drone, et le bloc batterie crée un relais de structure entre, d'une part, les points de fixation des bras de liaison avant positionnés de manière relativement haute et, d'autre part, les points de fixation des bras de liaison arrière positionnés de manière relativement basse ;
- le moyen de fixation du bloc batterie comprend au moins un crochet, et le moyen de fixation complémentaire de la plateforme comprend au moins un élément en relief sur la plateforme apte à coopérer avec ledit au moins un crochet ;
- la structure avant du corps de drone comprend un élément en saillie, le bloc batterie comprend un évidement de forme complémentaire de l'élément en saillie de la structure avant, et l'évidement comprend un moyen de fixation coopérant avec un moyen de fixation complémentaire positionné sur l'élément en saillie sur le corps du drone ;
- le bloc batterie comprend : une première partie ayant une longueur et une largeur sensiblement identiques à la longueur et la largeur de la plateforme du corps du drone ; et une seconde partie s'étendant au-delà de la plateforme du corps de drone, cette seconde partie étant plus épaisse que la première partie et s'étendant au moins en partie face à l'extrémité libre du corps de drone, et comprenant une connectique (56) apte à coopérer avec une connectique complémentaire située à l'extrémité libre de la plateforme ;
- le bloc batterie comprend un bouton-poussoir permettant de libérer la fixation du bloc batterie et donc une translation de celui-ci en vue de la désolidarisation du corps de drone ;
- le rail de guidage est positionné sensiblement dans la partie centrale de la plateforme ; et/ou
- le rail de guidage est réalisé sur au moins une partie de la longueur de la plateforme, la longueur de la plateforme étant définie comme étant la longueur dans le sens principal de vol du drone.

On va maintenant décrire un exemple de mise en oeuvre de la présente invention, en référence aux dessins annexés.
La Figure 1 est une vue d'ensemble du drone conformément à l'invention.
La Figure 2 est une vue du drone sans le bloc batterie conformément à l'invention.
La Figure 3 est une vue détaillée de la plateforme du corps de drone apte à accueillir le bloc batterie conformément à l'invention.
La Figure 4 illustre un bloc batterie conformément à l'invention.
La Figure 5 représente une coupe verticale du drone dans le sens transversal du drone au niveau du bloc batterie coopérant avec la plateforme du corps de drone selon l'invention.
La Figure 6 représente une coupe verticale longitudinale du drone illustrant la coopération du bloc batterie avec le corps de drone conformément à l'invention.
La Figure 7 est une vue de dessus du bloc batterie selon un mode de réalisation du bloc batterie conforme à l'invention.

On va maintenant décrire un exemple de réalisation de l'invention.

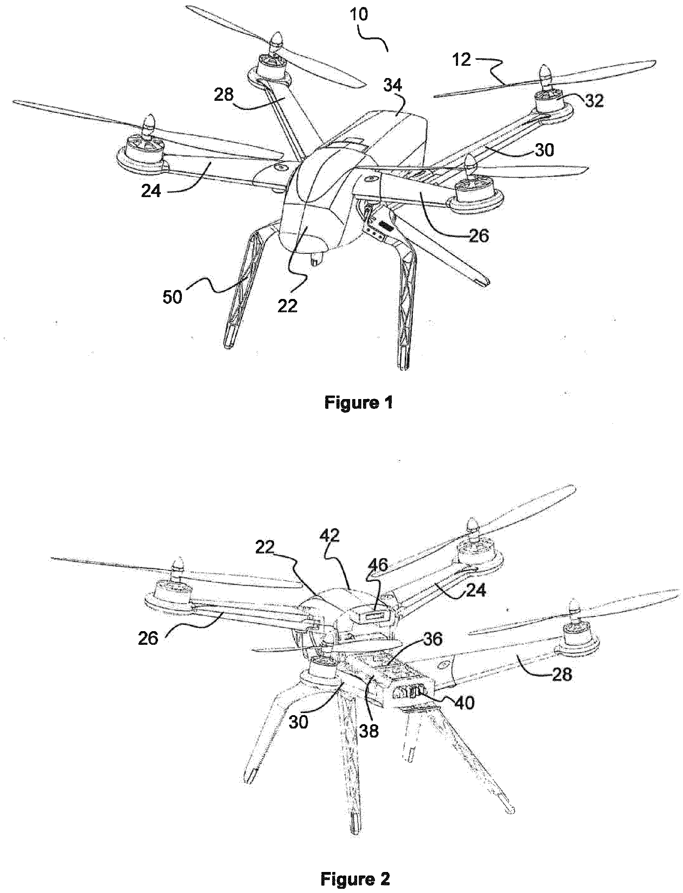

Sur la Figure 1, la référence 10 désigne de façon générale un drone. Selon l'exemple illustré en Figure 1, il s'agit d'un drone de type quadricoptère.

Le drone quadricoptère 10 comporte un corps de drone 22 et deux bras de liaison avant 24, 26 et deux bras de liaison arrière 28, 30 s'étendant à partir du corps de drone 22 et comprenant à leur extrémité distale un bloc propulseur 32 sur lequel est assemblée une hélice 12, les positions avant et arrière des bras de liaison étant définies par rapport au sens principal de vol du drone. Le bloc-propulseur comprend un moteur et une hélice 12 assemblée sur le moteur.

Les blocs propulseurs sont pilotés indépendamment par un système intégré de navigation et de contrôle d'attitude.

Le drone 10 comporte également une caméra à visée frontale (non représentée) permettant d'obtenir une image de la scène vers laquelle est dirigé le drone. Le drone comporte également une caméra à visée verticale (non représentée) pointant vers le bas, apte à capter des images successives du terrain survolé et utilisée notamment pour évaluer la vitesse du drone par rapport au sol.

Le drone quadricoptère 10 présente une structure de châssis particulière, notamment l'utilisation d'une forme appelée "VTail" à l'arrière du drone par rapport au déplacement principal de vol du drone. En d'autres termes, le châssis est modifié de telle sorte que les deux bras de liaison arrière 28, 30 forment un V entre eux.

Ainsi, les points de fixation au corps du drone des deux bras de liaison avant 24, 26 et les points de fixation au corps du drone des deux bras de liaison arrière 28, 30 sont situés à des hauteurs respectives différentes par rapport au plan médian horizontal du corps du drone 22.

En outre, les deux bras de liaison avant 24, 26 du drone forment un premier angle d'inclinaison par rapport au plan médian horizontal du corps du drone, et les deux bras de liaison arrière 28, 30 forment un second angle d'inclinaison par rapport au plan médian horizontal du corps du drone différent du premier angle.

Selon un exemple de mode de réalisation, deux bras de liaison avant 24, 26 du drone forment un angle de 0 à 10° par rapport au plan médian horizontal du corps du drone et les deux bras de liaison arrière 28, 30 forment un angle compris entre 15° et 45°. Selon un mode de réalisation particulier, l'angle relatif aux deux bras de liaison arrière est environ 30°.

Les hélices 12 assemblées sur les blocs propulseurs 32 respectivement du bras avant 26 et du bras arrière 30 sont positionnées dans un même plan, notamment un même plan de rotation. Et les hélices 12 assemblées sur les blocs propulseurs 32 respectivement du bras avant 24 et du bras arrière 28 sont positionnées dans un même plan, notamment un même plan de rotation. En d'autres termes, les hélices assemblées sur les blocs propulseurs 32 d'un même côté du drone sont positionnées dans un même plan, notamment un même plan de rotation. Le côté du drone est défini au regard du sens principal de vol du drone.

Selon une alternative de réalisation, les hélices assemblées sur les blocs propulseurs du drone sont toutes positionnées dans un même plan, notamment un même plan de rotation.

Les hélices 12 sont aptes à être désassemblées du bloc propulseur 32, soit pour être rangées soit pour être changées dans le cas où les hélices sont endommagées.

Selon un mode de réalisation particulier, les hélices assemblées sur les blocs propulseurs 32 des bras de liaison 24, 26 avant du drone mesurent 279 millimètres de diamètre alors que les hélices 12 assemblées sur les blocs propulseurs des bras de liaison arrière 28, 30 du drone mesurent 229 millimètres de diamètre.

Le drone comprend également un bloc batterie 34 assemblé sur le corps du drone 22.

En outre, le drone dispose de supports de drone 50 permettant au drone une position stable au sol.

Selon un exemple de réalisation, le drone est muni de capteurs inertiels (accéléromètres et gyromètres) permettant de mesurer avec une certaine précision les vitesses angulaires et les angles d'attitude du drone, c'est-à-dire les angles d'Euler (tangage *ϕ*, roulis *θ* et cap *ψ*) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone fournit par ailleurs une mesure de l'altitude par rapport au sol.

En Figure 2 est illustré le drone de la Figure 1 sans le bloc batterie. Le corps de drone comprend une plateforme 36 sur laquelle vient s'assembler le bloc batterie 34.

La plateforme 36 du corps de drone comprend sur la surface de plateforme apte à accueillir le bloc batterie au moins un rail de guidage 38 apte à coopérer avec un profil de guidage complémentaire présent sur le bloc batterie.

De part et d'autre de la plateforme 36 apte à accueillir le bloc batterie sont fixés les bras de liaison arrière du drone.

Selon un mode de réalisation particulier, la plateforme comprend une connectique électrique 40 positionnée sur l'extrémité libre de la plateforme. À l'extrémité opposée de la plateforme, le corps de drone comprend une structure avant 42 du drone. Sur cette structure avant du drone, sont fixés les bras de liaison avant du drone.

La structure avant 42 du drone comprend notamment un dispositif de commande du drone, des moyens de communication du drone avec un dispositif de pilotage et au moins une caméra frontale (non représentée). Comme illustré, la plateforme 36 du corps de drone est relativement de faible épaisseur ce qui ne permet pas d'assurer la rigidité nécessaire pour éviter une déformation de la plateforme transmise notamment aux bras de liaison arrière 28, 30 lors du vol du drone.

Sur ce point, le caractère "déformable" de la plateforme doit être entendu en ce sens que pendant le vol, en l'absence de tout moyen raidisseur additionnel (*infra*) : i) la plateforme subirait les contraintes résultant des efforts produits par les blocs propulseurs et transmis par les bras de liaison, ii) ces contraintes engendreraient alors des déformations en torsion et/ou en flexion de la plateforme affectant la géométrie relative des quatre bras, notamment des bras arrière par rapport aux bras avant, avec par voie de conséquence iii) des effets suffisants pour perturber de façon mesurable le comportement aérodynamique du drone en vol.

De fait, pour certaines géométries particulières de corps de drone, la déformation de ce dernier serait très rapidement susceptible d'engendrer des difficultés appréciables de pilotage et de stabilisation d'assiette pendant les phases de vol, notamment lors des changements brusques d'attitude, qui génèrent de façon subite des contraintes différentielles importantes.

On notera que les contraintes subies par la plateforme sont accentuées par effet de levier - le couple de torsion appliqué étant d'autant plus élevé que les bras sont longs et qu'est important le décalage en hauteur des bras avant hauts et des bras arrière bas raccordés à l'extrémité arrière de la plateforme. On notera également que les déformations de flexion et de torsion de la plateforme sont accentuées par la forme allongée de cette dernière, comme dans l'exemple illustré sur les figures.

Pour résoudre ce problème, conformément à l'invention, le bloc batterie 34 est un bloc rigide qui comprend au moins un profil de guidage et un moyen de fixation permettant d'assembler le bloc batterie sur le corps de drone, notamment sur la plateforme 36 du corps de drone, et de solidariser le corps du drone avec le bloc batterie.

Le caractère "rigide" du bloc batterie doit être entendu comme une rigidité relative : soumis aux mêmes efforts que la plateforme, la déformation propre en flexion/torsion du bloc batterie est moindre que celle de la plateforme, voire quasi-nulle. De fait, lorsque le bloc batterie et la plateforme sont solidarisé pour former un ensemble monobloc, la rigidité du bloc batterie renforce structurellement le corps du drone et rigidifie le corps donc évite une déformation de la plateforme du corps de drone. Les inconvénients exposés ci-dessus liés au comportement aérodynamique (difficultés de pilotage, de stabilisation d'assiette, etc.) sont alors évités, ou à tout le moins réduits à des niveaux non mesurables et/ou non gênants sur le plan du contrôle de vol du drone.

Le corps de drone comprend également au moins un moyen de fixation complémentaire du moyen(s) de fixation du bloc batterie.

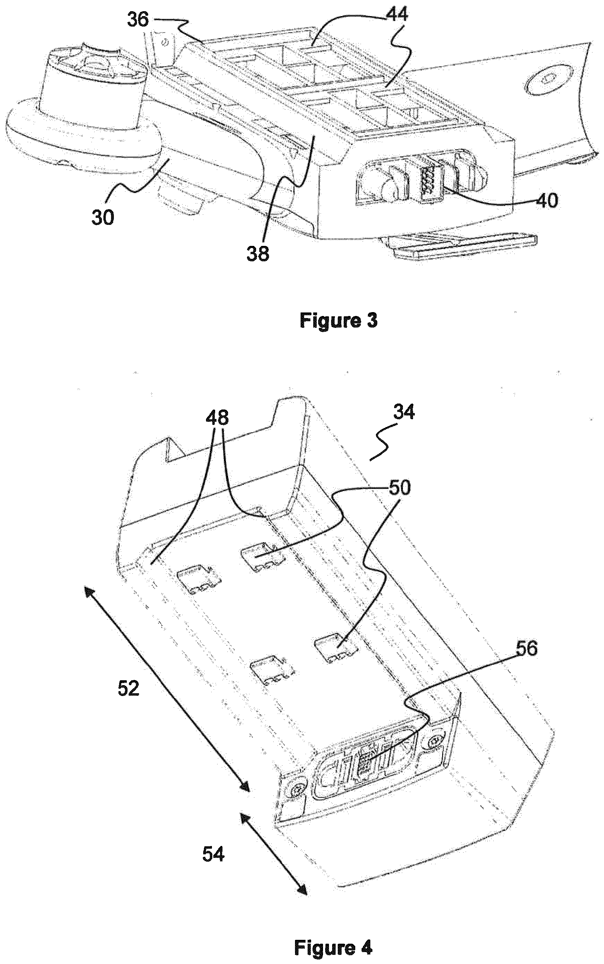

Comme illustré en Figure 3, le rail de guidage 38 de la plateforme 36 du corps de drone est de section trapézoïdale. Le rail de guidage est présent sur au moins une partie de la plateforme. Le rail de guidage peut être présent sur la longueur ou sur la largeur de la plateforme.

Comme illustré en Figure 2 et en Figure 3, le rail de guidage 38 est réalisé sur toute la longueur de la plateforme 36, la longueur de la plateforme étant définie comme étant la longueur dans le sens principal de vol du drone.

Selon un autre mode de réalisation, le rail de guidage 38 est présent sur au moins une partie de la longueur de la plateforme 36.

Selon un mode de réalisation particulier, le rail de guidage 38 est positionné sensiblement dans la partie centrale de la plateforme. Toutefois, de manière alternative, le rail de guidage peut être positionné de manière sensiblement décalée sur l'un des côtés de la plateforme.

Le rail de guidage 38 de la plateforme du corps de drone permet un positionnement et notamment un centrage automatique du bloc batterie lors de la mise en place du(x) bloc batterie.

Le rail de guidage permet également une reprise mécanique des efforts de torsion de la structure principale générés en particulier lors du fonctionnement des blocs propulseurs.

Selon un mode de réalisation particulier, la plateforme 36 du corps de drone comprend en outre un ou plusieurs moyens de fixation 44. Le ou les moyens de fixation sont par exemple un ou une pluralité d'éléments en relief 44 aptes à coopérer avec des moyens de fixation du bloc batterie 34.

De manière alternative ou complémentaire, le corps de drone comprend, notamment sur la structure avant du corps de drone, un moyen de fixation complémentaire d'un moyen de fixation sur la batterie de sorte à renforcer la solidarisation du bloc batterie au corps de drone.

Comme illustré en Figure 2, ce moyen de fixation présent sur la structure avant du corps de drone est présent par exemple sur un élément en saillie 46 du corps de drone, présent sur la partie haute de la structure avant du corps de drone.

En Figure 4, est illustré un bloc batterie 34 conforme à l'invention. Le bloc batterie 34 comprend un profil de guidage 48 de forme complémentaire du rail de guidage 38 de la plateforme du corps de drone.

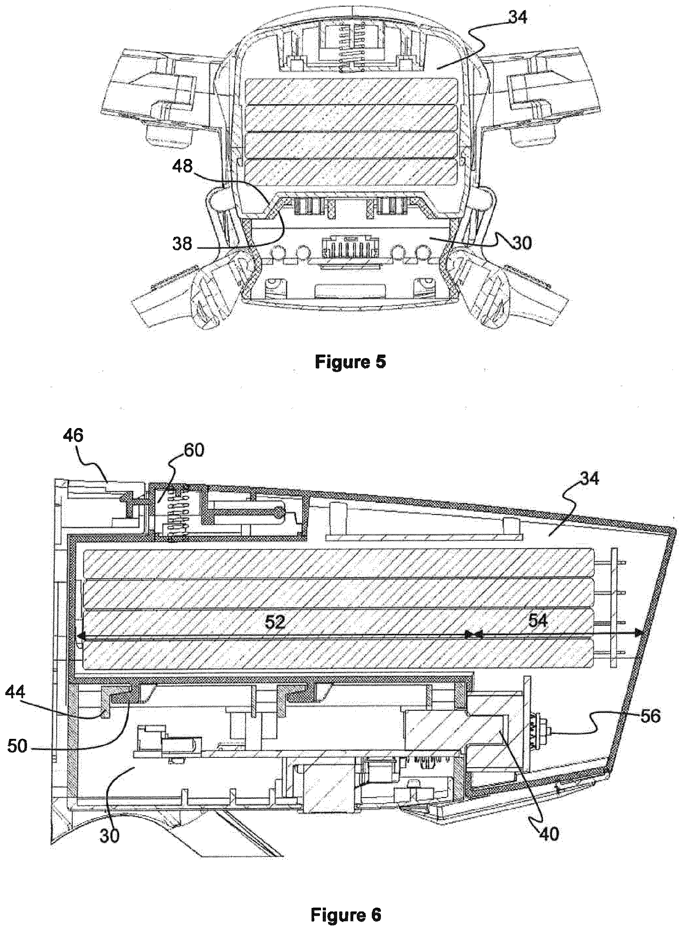

La Figure 5 illustre la complémentarité de forme du rail de guidage 38 de la plateforme et le profil de guidage 48 du bloc batterie.

Le profil de guidage 48 est présent sur au moins une partie du bloc batterie devant coopérer avec la plateforme du corps de drone. Le profil de guidage 48 peut être présent sur la longueur ou sur la largeur du bloc batterie.

Selon un mode de réalisation particulier, le bloc batterie comprend un ou plusieurs moyens de fixation, par exemple au moins un crochet 50 et le moyen de fixation complémentaire situé sur la plateforme 36 du corps de drone comprend au moins un relief 44 sur la plateforme du corps de drone apte à coopérer avec le(s) crochet(s).

Notamment selon l'exemple illustré en Figure 4, le bloc batterie comprend quatre moyens de fixation complémentaires notamment quatre crochets aptes à coopérer avec les éléments en relief de la plateforme du corps de drone.

Les moyens de fixation mécaniques permettent une bonne tenue mécanique de la batterie et une bonne solidarisation du bloc batterie sur la structure du corps de drone.

La Figure 6 illustre notamment la coopération des moyens de fixation du bloc batterie 34, notamment de crochets 50 avec des moyens de fixation complémentaires présents sur la plateforme du corps de drone, notamment des éléments en relief 44.

Comme illustré en Figure 4, le bloc batterie comprend une première partie 52 ayant une longueur et une largeur sensiblement identiques à la longueur et la largeur de la plateforme 36 du corps du drone, et une seconde partie 54 s'étendant au-delà de la plateforme du corps de drone. La seconde partie 54 est plus épaisse que la première partie 52 et s'étend au moins en partie face à l'extrémité libre du corps de drone. La seconde partie 54 comprend une connectique 56 qui vient coopérer avec une connectique complémentaire 40 positionnée à l'extrémité libre de la plateforme.

La Figure 6 illustre la coopération de la connectique du bloc batterie 56 avec la connectique complémentaire 40 positionnée à l'extrémité libre de la plateforme.

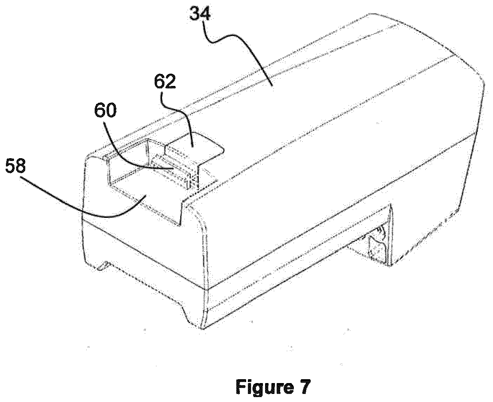

La Figure 7 illustre un exemple de bloc batterie selon un mode de réalisation de l'invention vu de dessus.

Selon ce mode de réalisation, le bloc batterie comprend un moyen de fixation apte à coopérer avec un moyen de fixation complémentaire présent notamment sur la structure avant 42 du corps de drone. Ces moyens de fixation permettent le blocage en translation du bloc batterie.

Comme illustré en Figure 7, le bloc batterie comprend un évidement 58 de forme complémentaire d'un élément en saillie 46 sur le corps du drone, l'évidement 58 du bloc batterie comprend un moyen de fixation 60 coopérant avec un moyen de fixation complémentaire positionné sur l'élément en saillie 46 sur le corps du drone.

Selon un mode de réalisation particulier, le bloc batterie comprend un bouton-poussoir 62 permettant de libérer la fixation du bloc batterie et donc une translation de celui-ci en vue de la désolidarisation du corps de drone.

Comme illustré en Figure 1, l'assemblage du bloc batterie sur le corps de drone, permet un renfort structurel du drone et une bonne rigidité du drone. Le bloc batterie est positionné notamment à l'arrière du drone de sorte à créer un relai de structure entre les points de fixation des bras de liaison avant positionnés de manière relativement haute et les points de fixation des bras de liaison arrière positionnés de manière relativement basse.

Enfin, il est observé que le bloc batterie 34 comprend en partie l'enveloppe externe du drone 10. En effet, le bloc batterie forme par exemple sur plusieurs côtés la structure externe du drone.

## Revendications

1. Drone à voilure tournante (10) comprenant :
- un corps de drone (22) avec une structure de châssis comprenant une structure avant (42) et une plateforme (36) s'étendant vers l'arrière à partir de la structure avant ;
- des bras de liaison avant (24, 26) fixés à la structure avant, et des bras de liaison arrière (28, 30) fixés à la plateforme, chacun des bras de liaison avant et arrière comprenant à son extrémité distale un bloc propulseur (32) ; et
- un bloc batterie (34) apte à être monté sur la plateforme de la structure de châssis, et comportant un moyen de fixation (50) pour solidariser la batterie à la plateforme,
**caractérisé en ce que**, la plateforme (36) étant déformable et susceptible d'entrainer incidemment une déformation des bras de liaison arrière lors du vol du drone :
- le bloc batterie (34) est rigide et comprend le moyen de fixation (50) ainsi qu'un profil de guidage (48) ;
- la plateforme (36) comprend au moins un rail de guidage (38) agencé sur une surface de la plateforme apte à accueillir le bloc batterie, et apte à coopérer avec le profil de guidage (48) du bloc batterie,
le rail de guidage (38) étant de section trapézoïdale et présent sur au moins une partie de la plateforme, et le profil de guidage (48) étant de forme complémentaire de telle sorte que le rail de guidage permette une reprise mécanique des efforts de torsion de la structure de châssis générés lors du vol du drone ; et
- la plateforme (36) comprend en outre au moins un moyen de fixation complémentaire (44) apte à coopérer avec le moyen de fixation (50) du bloc batterie, le moyen de fixation et le moyen de fixation complémentaire étant aptes à permettre un blocage en translation du bloc batterie.

2. Drone selon la revendication 1, **caractérisé en ce que** les points de fixation au corps du drone des deux bras de liaison avant (24, 26) et les points de fixation au corps du drone des deux bras de liaison arrière (28, 30) sont situés à des hauteurs respectives différentes par rapport au plan médian horizontal du corps du drone (22),
et **en ce que** le bloc batterie crée un relais de structure entre, d'une part, les points de fixation des bras de liaison avant positionnés de manière relativement haute et, d'autre part, les points de fixation des bras de liaison arrière positionnés de manière relativement basse.

3. Drone selon la revendication 1, **caractérisé en ce que** :
- le moyen de fixation du bloc batterie comprend au moins un crochet (50), et
- le moyen de fixation complémentaire de la plateforme comprend au moins un élément en relief (44) sur la plateforme apte à coopérer avec ledit au moins un crochet.

4. Drone selon la revendication 1, **caractérisé en ce que** :
- la structure avant (42) du corps de drone comprend un élément en saillie (46) ;
- le bloc batterie (34) comprend un évidement (58) de forme complémentaire de l'élément en saillie de la structure avant ; et
- l'évidement comprend un moyen de fixation (60) coopérant avec un moyen de fixation complémentaire positionné sur l'élément en saillie sur le corps du drone.

5. Drone selon la revendication 1, **caractérisé en ce que** le bloc batterie (34) comprend :
- une première partie (52) ayant une longueur et une largeur sensiblement identiques à la longueur et la largeur de la plateforme du corps du drone ; et
- une seconde partie (54) s'étendant au-delà de la plateforme du corps de drone, cette seconde partie étant plus épaisse que la première partie et s'étendant au moins en partie face à l'extrémité libre du corps de drone, et comprenant une connectique (56) apte à coopérer avec une connectique complémentaire (40) située à l'extrémité libre de la plateforme.

6. Drone selon la revendication 1, **caractérisé en ce que** le bloc batterie (34) comprend un bouton-poussoir (62) permettant de libérer la fixation du bloc batterie et donc une translation de celui-ci en vue de la désolidarisation du corps de drone.

7. Drone selon la revendication 1, **caractérisé en ce que** le rail de guidage (38) est positionné sensiblement dans la partie centrale de la plateforme.

8. Drone selon la revendication 1, **caractérisé en ce que** le rail de guidage (38) est réalisé sur au moins une partie de la longueur de la plateforme (36), la longueur de la plateforme étant définie comme étant la longueur dans le sens principal de vol du drone.

## Patentansprüche

1. Rotorblattdrohne (10), umfassend:
- einen Drohnenkörper (22) mit einer Rahmenstruktur, die eine vordere Struktur (42) und eine Plattform (36), die sich von der vorderen Struktur nach hinten erstreckt, umfasst;
- vordere Verbindungsarme (24, 26), die an der vorderen Struktur befestigt sind, und hintere Verbindungsarme (28, 30), die an der Plattform befestigt sind, wobei jeder der vorderen und hinteren Verbindungsarme an seinem distalen Ende ein Triebwerk (32) umfasst; und
- einen Batterieblock (34), der an der Plattform der Rahmenstruktur montierbar ist und ein Befestigungsmittel (50) aufweist, um die Batterie fest mit der Plattform zu verbinden,
**dadurch gekennzeichnet, dass**, da die Plattform (36) verformbar ist und in der Lage ist, im Übrigen eine Verformung der hinteren Verbindungsarme beim Flug der Drohne zu bewirken:
- der Batterieblock (34) starr ist und das Befestigungsmittel (50) sowie ein Führungsprofil (48) umfasst;
- die Plattform (36) wenigstens eine Führungsschiene (38) umfasst, die auf einer Oberfläche der Plattform angeordnet ist, in der Lage ist, den Batterieblock aufzunehmen, und in der Lage ist, mit dem Führungsprofil (48) des Batterieblocks zusammenzuwirken,
wobei die Führungsschiene (38) einen trapezförmigen Querschnitt hat und auf wenigstens einem Teil der Plattform vorliegt, und wobei das Führungsprofil (48) komplementärer Form ist, derart, dass die Führungsschiene eine mechanische Aufnahme der beim Flug der Drohne generierten Torsionskräfte der Rahmenstruktur gestattet; und
- die Plattform (36) ferner wenigstens ein komplementäres Befestigungsmittel (44) umfasst, das in der Lage ist, mit dem Befestigungsmittel (50) des Batterieblocks zusammenzuwirken, wobei das Befestigungsmittel und das komplementäre Befestigungsmittel in der Lage sind, eine Sperrung des Batterieblocks gegen Translation zu gestatten.

2. Drohne nach Anspruch 1, **dadurch gekennzeichnet, dass** die Punkte der Befestigung der zwei vorderen Verbindungsarme (24, 26) an dem Körper der Drohne und die Punkte der Befestigung der zwei hinteren Verbindungsarme (28, 30) sich in jeweiligen, bezüglich der horizontalen Mittelebene des Körpers der Drohne (22) verschiedenen Höhen befinden
und dass der Batterieblock einen Strukturkontakt zwischen, einerseits, den Punkten der Befestigung der vorderen Verbindungsarme, die relativ weit oben positioniert sind, und, andererseits, den Punkten der Befestigung der hinteren Verbindungsarme, die relativ weit unten positioniert sind, erzeugt.

3. Drohne nach Anspruch 1, **dadurch gekennzeichnet, dass**:
- das Befestigungsmittel des Batterieblocks wenigstens einen Haken (50) umfasst und
- das komplementäre Befestigungsmittel der Plattform wenigstens ein erhabenes Element (44) auf der Plattform umfasst, das in der Lage ist, mit dem wenigstens einen Haken zusammenzuwirken.

4. Drohne nach Anspruch 1, **dadurch gekennzeichnet, dass**:
- die vordere Struktur (42) des Drohnenkörpers ein vorspringendes Element (46) umfasst;
- der Batterieblock (34) eine Ausnehmung (58) umfasst, deren Form zu dem vorspringenden Element der vorderen Struktur komplementär ist; und
- die Ausnehmung ein Befestigungsmittel (60) umfasst, das mit einem komplementären Befestigungsmittel zusammenwirkt, das auf dem vorspringenden Element auf dem Körper der Drohne positioniert ist.

5. Drohne nach Anspruch 1, **dadurch gekennzeichnet, dass** der Batterieblock (34) Folgendes umfasst:
- einen ersten Teil (52) mit einer Länge und einer Breite, die im Wesentlichen mit der Länge und der Breite der Plattform des Körpers der Drohne identisch sind; und
- einen zweiten Teil (54), der sich jenseits der Plattform des Drohnenkörpers erstreckt, wobei dieser zweite Teil dicker ist als der erste Teil und sich wenigstens zum Teil dem freien Ende des Drohnenkörpers zugewandt erstreckt, und eine Anschlusstechnik (56) umfasst, die in der Lage ist, mit einer komplementären Anschlusstechnik (40) zusammenzuwirken, die sich an dem freien Ende der Plattform befindet.

6. Drohne nach Anspruch 1, **dadurch gekennzeichnet, dass** der Batterieblock (34) einen Drucktaster (62) umfasst, der das Freigeben der Befestigung des Batterieblocks und somit eine Translation dieses letzten zum Zwecke des Lösens des Drohnenkörpers gestattet.

7. Drohne nach Anspruch 1, **dadurch gekennzeichnet, dass** die Führungsschiene (38) im Wesentlichen in dem mittigen Teil der Plattform positioniert ist.

8. Drohne nach Anspruch 1, **dadurch gekennzeichnet, dass** die Führungsschiene (38) über wenigstens einen Teil der Länge der Plattform (36) realisiert ist, wobei die Länge der Plattform als die Länge in der Hauptflugrichtung der Drohne definiert ist.

## Claims

1. A rotary-wing drone (10) comprising:
- a drone body (22) with a frame structure comprising a front structure (42) and a platform (36) extending rearward from the front structure;
- front linking arms (24, 26) fixed to the front structure, and rear linking arms (28, 30) fixed to the platform, each of the front and rear linking arms comprising a propulsion unit (32) at its distal end; and
- a battery pack (34) adapted to be mounted on the platform of the frame structure, and including a fixation means (50) for fastening the battery to the platform,
**characterized in that**, the platform (36) being deformable and liable to cause incidentally a deformation of the rear linking arms when the drone flies:
- the battery pack (34) is stiff and comprises the fixation means (50) as well as a guiding profile (48);
- the platform (36) comprises at least one guiding rail (38) arranged on a surface of the platform adapted to receive the battery pack, and adapted to cooperate with the guiding profile (48) of the battery pack,
the guiding rail (38) being of trapezoidal section and being present on at least part of the platform, and the guiding profile (48) being of complementary shape so that the guiding rail allow a mechanical recovery of the torsional efforts of the frame structure generated when the drone flies; and
- the platform (36) further comprises at least one complementary fixation means (44) adapted to cooperate with the fixation means (50) of the battery pack, the fixation means and the complementary fixation means being adapted to allow locking in translation of the battery pack.

2. The drone according to claim 1, **characterized in that** the points of fixation of the two front linking arms (24, 26) to the drone body and the points of fixation of the two rear linking arms (28, 30) to the drone body are located at different respective heights with respect to the horizontal median plane of the drone body (22),
and **in that** the battery pack creates a structural relay between, on the one hand, the points of fixation of the front linking arms positioned relatively high and, on the other hand, the points of fixation of the rear linking arms positioned relatively low.

3. The drone according to claim 1, **characterized in that**:
- the fixation means of the battery pack comprises at least one hook (50), and
- the complementary fixation means of the platform comprises at least one element in relief (44) on the platform, adapted to cooperate with said at least one hook.

4. The drone according to claim 1, **characterized in that**:
- the front structure (42) of the drone body comprises a protruding element (46);
- the battery pack (34) comprises a recess (58) having a shape that is complementary to that of the protruding element of the front structure; and
- the recess comprises a fixation means (60) cooperating with a complementary fixation means positioned on the protruding element on the drone body.

5. The drone according to claim 1, **characterized in that** the battery pack (34) comprises:
- a first part (52) having a length and a width substantially identical to the length and the width of the platform of the drone body; and
- a second part (54) extending beyond the platform of the drone body, this second part being thicker than the first part and extending at least in part opposite the free end of the drone body, and comprising a connection mean (56) adapted to cooperate with a complementary connection means (40) located on the free end of the platform.

6. The drone according to claim 1, **characterized in that** the battery pack (34) comprises a push-button (62) making it possible to release the fixation of the battery pack and hence a translation of the latter for the separation thereof from the drone body.

7. The drone according to claim 1, **characterized in that** the guiding rail (38) is substantially positioned in the central part of the platform.

8. The drone according to claim 1, **characterized in that** the guiding rail (38) is made over at least one part of the length of the platform (36), the platform length being defined as the length in the main direction of flight of the drone.
